# EUROPEAN PATENT APPLICATION

(11) **EP 1 909 122 A2**
(43) Date of publication of application: **09.04.2008**
(21) Application number: 07017302.6
(22) Date of filing: 04.09.2007
(51) Int. Cl.: G02B 6/00

(54) **Lighting apparatus**

(30) Priority: 05.09.2006 JP 2006240589
(71) Applicant: Moritex Corporation, Tokyo (JP)
(72) Inventor: Yoshida, Hitoshi, Sakura-ku Saitama-shi Saitama (JP); Shimizu, Masayuki, Sakura-ku Saitama-shi Saitama (JP); Kusuhara, Takashi, Sakura-ku Saitama-shi Saitama (JP)
(74) Representative: Stachow, Ernst-Walther

(57) **Abstract**

In a lighting apparatus for conducting product inspection by irradiation of LED light at an improved inspection accuracy, an LED light source device for scattering lights of a plurality types of LEDs of different emission wavelengths by a light guiding member and irradiating them from a light emitting surface in the direction of the lighting optical axis is attached to a casing having a light transmitting imaging section through which an imaging optical axis extends, the light guiding member has a plurality of light guiding plates with the light emitting surface being directed to the lighting optical axis, each of the light guiding plates is mounted with LEDs at a predetermined pitch on the plane perpendicular to the light emitting surface, such that the combination of the emission wavelengths is identical for each of the rows in the direction of the lighting optical axis.

## Description

### BACKGROUND OF THE INVENTION

### Field of the Invention

The present invention concerns a lighting apparatus for scattering light irradiated from LEDs (light emitting diode) for respective colors in the inside of a light guiding member, emitting the scattered light uniformly from the light emitting surface, and irradiating the same to an object to be imaged by an imaging device.

### Description of the Related Art

Image inspection has been adopted generally, for example, in inspection and quality control of industrial products and it has been demanded for a lighting apparatus capable of continuously irradiating a stable light for a long time, with less consumption of electric power for clearly imaging products in plants.

For this purpose, it has been proposed a lighting apparatus in which LEDs are arranged on the lateral side of a transparent light guiding member with a frontal surface being as an light emitting surface and irradiation light from each LED is scattered in the inside of the light guiding member and emitted from the light emitting surface (JP-A No. 3187280)

According to the proposed apparatus, since LEDs are used as a light emitting source, a more stabilized lighting light can be irradiated for a long time under current control with less power consumption, so that maintenance cost and running cost can be decreased.
In addition, since high luminance LEDs have been developed recently, a sufficient brightness can be ensured as a lighting source by arranging them as LEDs.

By the way, in a case of using the lighting apparatus of this type, since a light at a specific wavelength is sometimes less transmitted/reflected depending on the object of the inspection, it is desirable that the wavelength (color) of the light for lighting can be selected optionally in general - purpose lines.
Therefore, it has also been proposed a lighting apparatus capable of emitting an optional color by arranging LEDs for respective RGB colors orderly on the lateral surface, or arranging color LEDs in which RGB chips are arranged in an individual element and controlling the amount of light on every color.

However, even when LEDs of respective RGB colors are arranged with no gap, since they have to be arranged at a pitch for the diameter of the element (diode device), this results in a problem that the lights for respective colors cannot be mixed sufficiently to cause color unevenness. Further, in a case of irradiating light of a monochromatic color, since a gap for three pitches is present between LEDs of an identical color, this results in a problem of causing luminance unevenness and since the number of elements for each color is reduced to 1/3, the luminance is lowered to about 1/3 according to simple calculation.
Accordingly, such color unevenness or luminance unevenness causes image reflection on the surface such as of metal products or resin products in a case where a lustering treatment is applied to the surface and, when products are inspected based on such images. Then, since intact products may possibly be taken for defective products as the accuracy for the image analysis is higher, this results in a contradiction that the detection accuracy is worsened more, as the detection sensitivity is higher.

In a case of using a color LED in which chips for RGB colors are arranged in an individual element, color unevenness due to the pitch of arrangement is not formed. However, color unevenness tends to occur because the emission characteristics (hue, brightness) are different on every chip. In addition, since it is impossible to exchange chips by decomposing the color LED, it is difficult to eliminate such color unevenness.
Moreover, since a light scattering agent or the like is used for uniformly mixing colors of lights, this also results in a problem that the luminance is further lowered.
Further, in a case of conducting monochromatic color lighting, since a high luminance LED has to be used for irradiating a light at a high luminance and since the luminance depends on the optical characteristics of each of the elements of LED to be used, it is impossible to emit light at a higher brightness.

### SUMMARY OF THE INVENTION

In view of the above, it is a technical subject of the invention, for example, in a case of conducting inspection of products by taking imaging from an industrial product as an object by irradiating the light of LEDs, to improve the inspection accuracy in product inspection without causing reflection of luminance unevenness or color unevenness of lighting in the images on the surface of the product to be inspected even when a lustering treatment is applied to the surface.

For attaining the subject, the present invention provides a lighting apparatus of irradiating a light to an object to be taken by an imaging device, wherein an LED light source device for scattering lights of a plurality types of LEDs of different emission wavelengths by a light guiding member and irradiating them from a light emitting surface in the direction of the lighting optical axis is attached to a casing having a light transmitting imaging section through which an imaging optical axis passes directing from the imaging device to the object, in which the light guiding member has a plurality of light guiding plates which are stacked with the light emitting surface being directed to the lighting optical axis, each of the light guiding plates is mounted with LEDs each at a predetermined pitch on the plane perpendicular to the light emitting surface, and the LEDs are arranged such that the combination of the emission wavelengths in the direction of the lighting optical axis is identical for each of the rows.

In the lighting apparatus according to the invention, since a light transmitting imaging section is formed to a casing in which an LED light source device is disposed and the imaging optical axis of the imaging device can pass through the light transmitting section, imaging can be conducted while irradiating the object by the LED light source device.
The LED light source device scatters lights from a plurality types of LEDs of different emission wavelengths by the light guiding member and irradiates them from the light emitting surface to the direction of the lighting optical axis, and the light guiding member is formed, for example, by stacking three light guiding plates in the direction of the lighting optical axis.
LEDs of three primary colors RGB are arranged on every color on the lateral surface perpendicular to the stacking surface of respective light guiding plates, and arranged such that the combination of the emission wavelength of LEDs is equal for each of rows along the direction of stacking the light guiding plates.

Accordingly, in a case of lighting a monochromatic color, when the LEDs for only one of the colors are lit up, the light is scattered in the inside of the light guiding member and emitted from the light emitting surface on the front. LEDs can be arranged in close adjacent with each other, a gap as large as three pitches is not formed between LEDs of the identical color as in a case of arranging LEDs for RGB colors in one row, unevenness of luminance is not caused. Further, since the number of elements per one color is not decreased, the luminance is riot lowered.
Further, in a case of lighting a mixed color, when LEDs of optional two or more colors are lit up, the lights are scattered in the inside of the light guiding member and emitted from the light emitting surface. Since the light guiding plates in which LEDs for respective colors are disposed being stacked along the light emitting direction, a uniform mixed light can be emitted from the light emitting surface without causing color unevenness..

In this invention, to attain a purpose of improving the accuracy for the inspection of a product, for example, in a case of inspecting a product by imaging an industrial product as an object by irradiating the light of LEDs, without reflecting luminance unevenness or color unevenness of lighting on the images even upon irradiation to a product applied with a lustering treatment for the surface, an LED light source device for scattering lights of a plurality types of LEDs of different emission wavelengths by a light guiding member and irradiating them from a light emitting surface in the direction of the lighting optical axis is attached to a casing having an imaging light transmitting section through which an imaging optical axis passes directing from the imaging device to the object, in which the light guiding member has a plurality of light guiding plates which are stacked with the light emitting surface being directed to the lighting optical axis, each of the light guiding plates is mounted with LEDs at a predetermined pitch on the plane perpendicular to the light emitting surface, and the LEDs are arranged such that the combination of the emission wavelengths is identical for each of the rows in the direction of the lighting optical axis.

### DESCRIPTION OF THE ACCOMPANYING DRAWINGS

The present invention is to be described in details with reference to the accompanying drawings, in which;

[0038]
Fig. 1 is a cross sectional view showing an example of a lighting apparatus according to the present invention;
Fig. 2 is a side elevational view thereof;
Fig. 3 is a perspective view showing an LED light source device;
Fig. 4 is a side elevational view thereof;
Fig. 5 is a perspective view showing another embodiment;
Fig. 6 is a plan view showing an LED light source device thereof;
Fig. 7 is a perspective view showing other embodiment; and
Fig.8 is a plan view showing an LED light source device thereof.

### DESCRIPTION OF PREFERRED EMBODIMENTS OF THE INVENTION

### [First Embodiment]

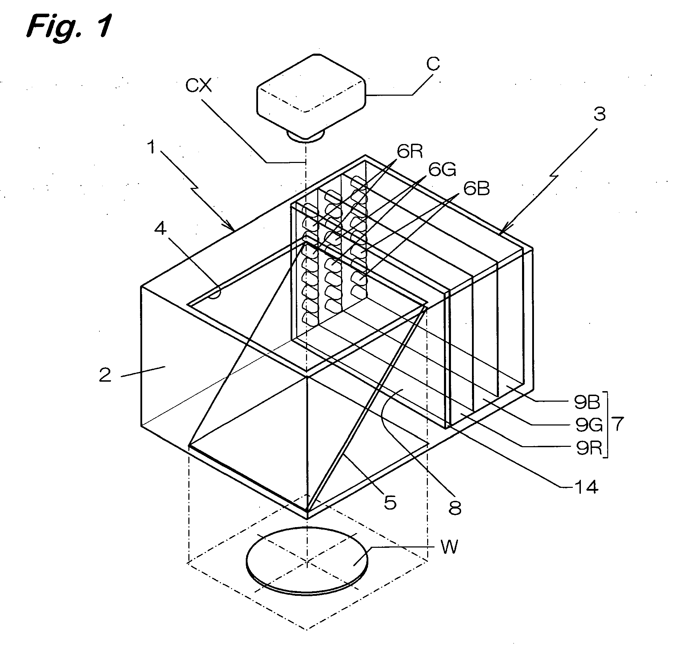

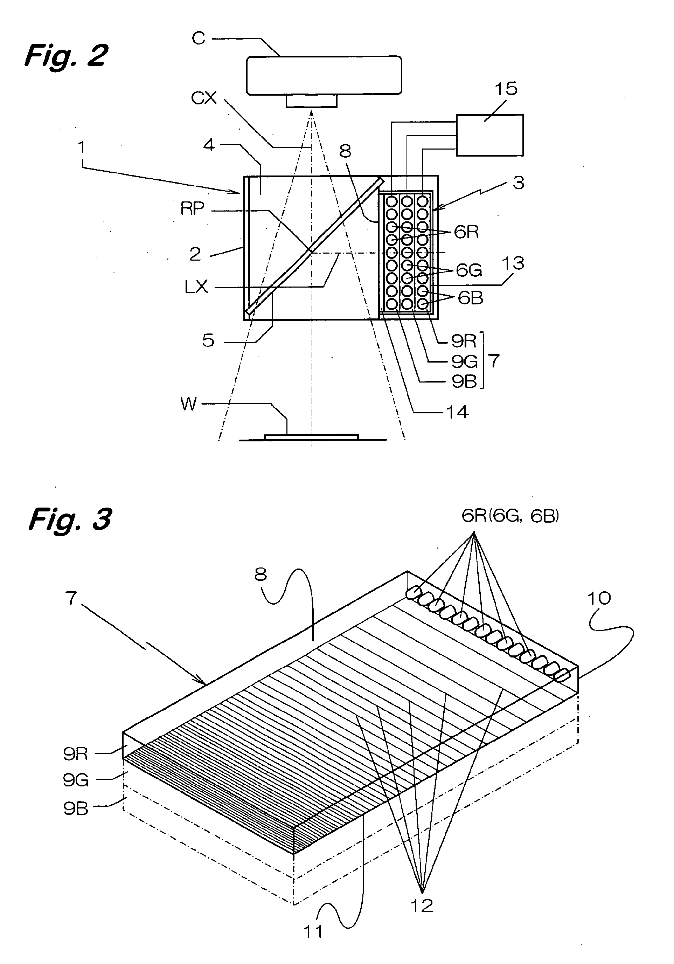

A lighting apparatus 1 shown in Fig. 1 to Fig. 4 is disposed on an imaging optical axis CX extending from an imaging device C to an object W and used upon irradiating a light to an object W.
In the lighting apparatus 1, an LED light source device 3 is attached to a cuboidal casing 2 and a light transmitting imaging section 4 through which an imaging optical axis CX passes is formed in the casing 2.
Then, in the light transmitting imaging section 4, the lighting optical axis LX of the LED light source device 3 and the imaging optical axis CX intersect at a predetermined angle (right angle in this embodiment), and a half mirror (beam splitter) 5 for reflecting the lighting light of the LED light source device 3 to the object W is disposed so as to pass the point of intersection RP.

Further, the LED light source device 3 is adapted to scatter lights irradiated from a plurality type of LEDs 6R, 6G, and 6B of different emission wavelengths (emission wavelength for three primary colors RGB in this embodiment) and irradiate the scattered light from the light emitting surface 8 in the direction of the lighting optical axis LX.
The light guiding member 7 is formed by stacking a plurality (three in this embodiment) of light guiding plates 9R, 9G, and 9B along the direction of the lighting optical axis LX.
Then, a lateral surface of each of the light guiding plates 9R, 9G, and 9B perpendicular to the light emitting surface 8 is formed as an LED mounting surface 10, and each of the LEDs 6R, 6G, and 6B for each of the colors is engaged to each mounting surface 10.

That is, red LEDs 6R are mounted in a row to the light guiding plate 9R, green LEDs 6R are mounted in a row to the light guiding plate 9G, and blue LEDs 6B are mounted in a row to the light guiding plate 9B, by which the LEDs 6R, 6G, and 6B are arranged such that the combination of emission wavelength is equal for each row along the direction of the lighting optical axis.

In each of the light guiding plates 9R, 9G, and 9B, concave scattering portions 12 --- for scattering a light incident from each of the LEDs 6R, 6G, and 6B are formed at the back surface 11 opposed to the light emitting surface 8.
The concave scattering portions 12 --- are formed linearly in parallel with the LED mounting surface 10 and formed such that the pitch of the portion 12 --- is narrowed as receding from the LED mounting surface 10.
By changing the pitch for the linear concave scattering portions 12 --- as described above, a uniform scattered light can be irradiated from the light emitting surface 8 since the amount of the scattered light increases on the side nearer to the LED mounting surface 10 and the amount of the scattered light decreases on the side receding from the LED mounting surface 10.

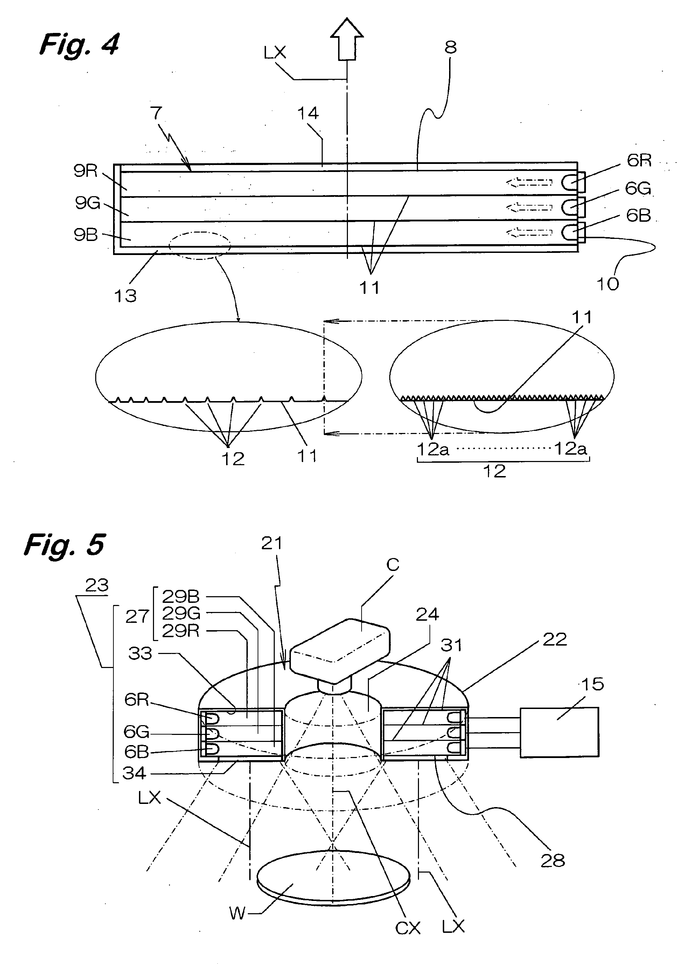

The shape of the concave scattering portion 12 is optional and it is not restricted only to a V-shaped linear groove but also may be formed linearly by continuously forming conical dot-shaped pits 12a each of a diameter × depth of 0.1 mm × 0.1 mm for the bottom each at 0.1 mm pitch by laser fabrication as shown in Fig. 4.
In a case of forming the conical pits 12acontinuously, the lights incident from the LEDs 6R, 6G, and 6B can be scattered more at random compared with the case of using the V-shaped groove, thereby improving the uniformity of the light irradiated from the light emitting surface 8.

Further, the light guiding member 7 is left open at the light emitting surface 8 and the LED mounting surface 10 and surrounded by a light scattering reflection plate 13 at other surfaces than described above. Thus, the light scattering reflection plate 13 is brought into an intimate contact with surfaces other than the light emitting surface 8 and the LED mounting surface 10 to reflect the scattered light emitted to the outside from each of the surfaces into the inside of the light guiding member 7 and a portion thereof can be utilized effectively as the lighting light.
Further, a light scattering transmitting plate 14 is stacked on the light emitting surface 8, so that the light irradiated from the light emitting surface 8 can be scattered more uniformly.

Further, a driving circuit 15 capable of lighting up/lighting off, or controlling the lights on respective color is connected to the LEDs 6R, 6G, and 6B of respective colors, so that the amount of light can be controlled on every color (emission wavelength).

The foregoing is a constitutional example of the invention and the operation thereof is to be described.
When LEDs 6R, 6G, and 6B for respective colors are lit by the driving circuit 15, the lights are scattered by the concave scattering portions 12 --- formed at the back surface 11 of each of the light guiding plates 9R, 9G, and 9B and the scattering reflection plate 13 at the periphery and scattered further by the light scattering transmitting plate 14. Then, a light of a substantially uniform light distribution is irradiated from the light emitting surface 8 in the direction of the lighting optical axis LX, reflected by the half mirror 5, irradiated to the object W.

In a case of lighting monochromatic color, only one of the LEDs 6R, 6G, and 6B for the relevant colors may be lit by the driving circuit 15. Since each of the LEDs 6R, 6G, and 6B for respective colors can be arranged close to each other with no gap, a gap as large as, for example, three pitches is not formed between LEDs of an identical color as in the case of arranging RGB LEDs in one row.
Accordingly, since unevenness of luminance is not caused, a uniform monochromatic lighting can be obtained and since the number of elements per one color is not decreased, the luminance is not lowered.

Then, in a case of lighting a mixed color, when LEDs for optional two or more colors are lit up among LEDs 6R, 6G, and 6B by the driving circuit 15, each of the lights is scattered in the light guiding member 7.
In this case, since the light guiding plates 9R, 9G, and 9B in which LEDs 6R, 6G, and 6B for respective colors are arranged being stacked forward and backward along the direction of the lighting optical axis LX, the lights irradiated from the light emitting surfaces 8 are mixed uniformly for the color and irradiated with no occurrence of color unevenness and also in a uniform state in view of the light distribution.
In this case, when the amount of light for LEDs 6R, 6G, and 6B for respective colors is optionally controlled individually, a light of an optional color can be irradiated.

Accordingly, in a case of imaging an industrial product as an object W while lighting by a monochromatic light or mixed color light and inspecting a product based on the images, since the luminance unevenness or color unevenness is not reflected in the images on the surface of the object W even when the surface is subjected to a lustering treatment, the accuracy in the production inspection can be improved.

### [Second Embodiment]

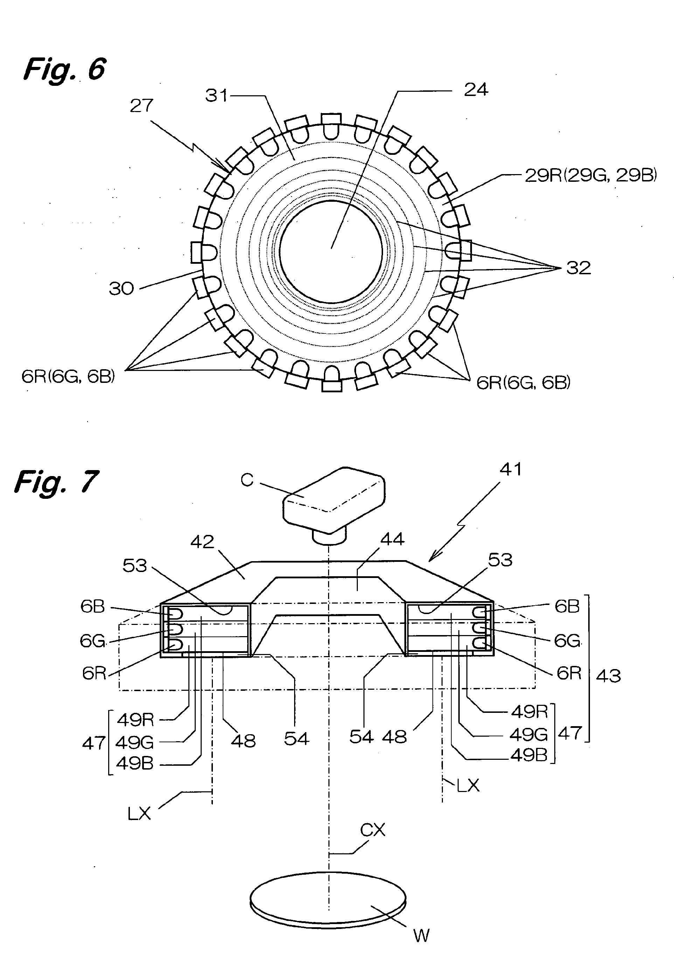

Fig. 5 and Fig. 6 show a second embodiment of the lighting apparatus according to the invention. Portions identical with those in Figs. 1 to 4 carry the same reference numerals, for which detailed descriptions are to be omitted.
In a lighting apparatus 21 of this embodiment, a casing 22 is formed into a ring-like annular shape surrounding an imaging optical axis CX from an imaging device C to an object W, in which an LED light source device 23 is disposed to irradiate the light from the bottom side thereof, and a central portion of the casing 22 constitutes a light imaging transmitting section 24.

The LED light source device 23 is adapted to scatter lights irradiated from a plurality type of LED 6R, 6G, and 6B of different emission wavelengths (three types for three primary colors RGB in this embodiment) by a light guiding member 27 and irradiate the scattered light in the direction of the lighting optical axis LX from the downwarded light emitting surface 28 to the object W.
The light guiding member 27 is formed by stacking a plurality (three in this embodiment) of ring-like annular light guiding plates 29R, 29G, and 29B in the direction of the lighting optical axis LX, in which the peripheral surface perpendicular to the light emitting surface 28 on the side opposite thereto is formed as an LED mounting surface 30, and each of LEDs 6R, 6G, and 6B for respective colors is engaged to each of the mounting surfaces 30.
That is, LEDs 6R for red color are mounted in a row to the light guiding plate 29R, LEDs 6G for green color are mounted in a row to the light guiding plate 29G, and LEDs 6B for blue color are mounted in a row to the light guiding plate 29B, and respective LEDs 6R, 6G, and 6B are arranged such that the combination of the emission wavelengths is equal for each of the rows along the direction of the lighting optical axis.

In each of the light guiding plates 29R, 29G, and 29B, concave scattering portions 32 --- for scattering light incident from each of the LEDs 6R, 6G, and 6B are formed at the back surface 31 of the light emitting surface 28.
The concave scattering portions 32 are formed concentrically.with the LED mounting surface 30 and formed such that the pitch is narrowed as receding from the LED mounting surface 30.
As described above, by changing the pitch for the linear concave scattering portions 32 ---, a uniform scattered light can be irradiated from the light emitting surface 28 since the amount of the scattered light decreases on the side nearer to the LED mounting surface 30 and the amount of scattered light increases as receding from the LED mounting surface 30.

The shape of the concave scattering portion 32 is optional and it is not restricted only to a V-shaped groove but also may be formed into a concentric shape by continuously forming conical dot-shaped pits 12a each of a diameter × depth of 0.1 mm × 0.1 mm each for the bottom at 0.1 mm pitch by laser fabrication in the same manner as in the first embodiment.
In a case of forming the conical pits continuously, the lights incident from the LEDs 6R, 6G, and 6B can be scattered more at random compared with the case of using the V-shaped groove thereby improving the uniformity of light irradiated from the light emitting surface 28.

Further, the light guiding member 27 is not surrounded at the light emitting surface 28 and the LED mounting surface 30 but surrounded by a light scattering reflection plate 33 at other surfaces than described above.
Thus, the light scattering reflection plate 33 is brought into an intimate contact with surfaces other than the light emitting surface 28 and the LED mounting surface 30 to reflect the scattered light emitted outward from each of the surfaces into the inside of the light guiding member 27 and a portion thereof can be utilized effectively as an irradiation light.
Further, an annular light scattering transmitting plate 34 is stacked on the light emitting surface 28, so that light irradiated from the light emitting surface 28 can be scattered more uniformly.

Further, a driving circuit 15 capable of lighting up/lighting off, or controlling the light on every color is connected to the LEDs 6R, 6G, and 6B for respective colors, so that the amount of light can be controlled on every color (emission wavelength).

According the lighting apparatus 21 of this embodiment, when the LEDs 6R, 6G, and 6B for respective colors are lit up by the driving circuit 15, the light is scattered by the concave scattering portions 32 formed at the back surface 31 of respective light guiding plates 29R, 29G, and 29B and the scattering reflection plate 33 at the periphery, and, further scattered by the light scattering transmitting plate 34. Then, a light of a substantially uniform light distribution is irradiated from the light emitting surface 28 in the direction of the lighting optical axis LX in parallel with the imaging optical axis CX and irradiated to the object W placed therebelow.

In a case of lighting a monochromatic color, only one of the LEDs 6R, 6G, and 6B for the respective colors may be lit up by the driving circuit 15. Since each of the LEDs 6R, 6G, and 6B for respective colors can be arranged close to each other with no gap, a gap as large as, for example, for three pitches is not formed between LEDs of an identical color as in the case of arranging RGB LEDs in one row.
Accordingly, since unevenness of luminance is not caused, a uniform monochromatic lighting can be obtained and since the number of elements per one color is not decreased, the luminance is not lowered as well.

Then, in a case of lighting mixed color, when LEDs of optional two or more colors are lit up among LEDs 6R, 6G, and 6B by the driving circuit 15, respective lights are scattered in the light guiding member 27.
In this case, since the light guiding plates 29R, 29G, and 29B in which LEDs 6R, 6G, and 6B for respective colors are arranged are disposed being stacked forward to backward along the light emitting direction, the lights irradiated from the light emitting surfaces 28 in the direction of the lighting optical axis LX are mixed uniformly for the color and cause no color unevenness and are irradiated also in a uniform state in view of the light distribution.
In this case, when the amount of light for LEDs 6R, 6G, and 6B for respective colors is optionally controlled individually, a light of an optional color can be irradiated.

Accordingly, in a case, for example, of imaging an industrial product as an object W while lighting by a monochromati'c light or a mixed color light and inspecting a product based on the images, since the luminance unevenness or color unevenness is not reflected in the images on the surface of the object W even the surface is subjected to a lustering treatment, the accuracy in the production inspection can be improved.

In the foregoing description, while explanation has been made to a case of mounting each of the LEDs 6R, 6G, and 6B for respective colors on every light guiding plates 9R, 9G, and 9B (29R, 29G, 29B), the invention is not restricted only thereto but the order may be different so long as the combination of the emission wavelengths of the LEDs 6R, 6G, and 6B arranged along the direction of the lighting optical axis LX is equal for each of the rows.
Further, the color of the LEDs is not restricted to the three colors so long as it is two or more colors. Further, they may be those emitting infrared light or ultraviolet light not being restricted to visible light so long as the emission wavelengths are different.
Further, the driving circuit 15 may be those that conduct only lighting up/lighting off, but do not conduct control for the amount of light.

### [Third Embodiment]

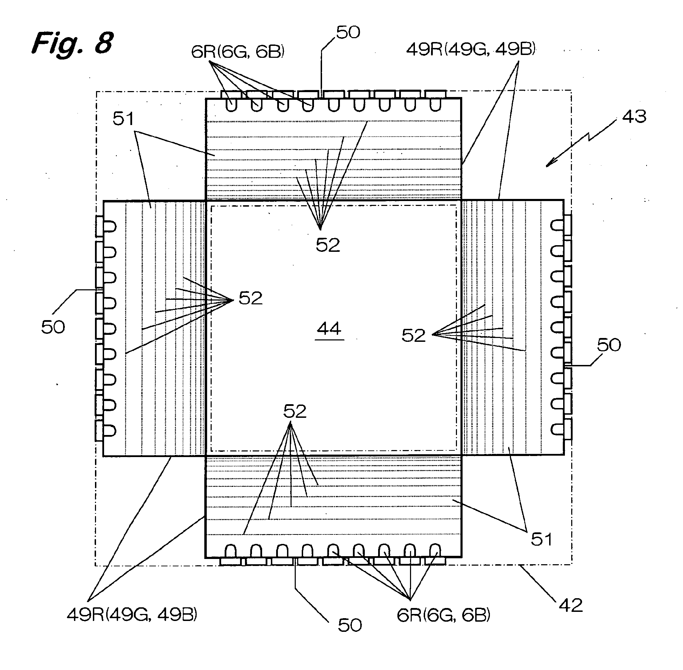

Furthermore, the shape of the casing 22 or the light guiding member 27 of the lighting apparatus 21 is not restricted to the annular circular shape but may be in an optional ring-like polygonal shape such as a ring-like trigonal shape, ring-like tetragonal shape, ring-like hexagonal shape, or a ring-like octagonal shape, or may be an open annular or ring-like polygonal shape formed by curving or bending so as to surround the imaging optical axis CX.
For example, in a lighting apparatus 41 shown in Fig. 7 and Fig. 8, a casing 42 is formed into a ring-like square shape surrounding the imaging optical axis CX, in which an LED light source device 43 is disposed to irradiate the light from the bottom side thereof and the central portion of the casing constitutes an imaging light transmitting section.
The LED light source device 43 is adapted to scatter lights irradiated from a plurality types of LEDs 6R, 6G, and 6B of different emission wavelengths by a light guiding member 47, and irradiate the scattered light in the direction of the lighting optical axis LX from the downwarded light emitting surface 48 to an object W.
The light guiding member 47 is formed by stacking a plurality (three in this embodiment) of light guiding plates 49R, 49G, and 49B in the direction of the lighting optical axis LX on every side of the ring-like square in which the side of the outer circumferential surface perpendicular to the light emitting surface 48 on the side opposite to the light emitting surface is formed as an LED mounting surface 50, and each of the LEDs 6R, 6G, and 6B for respective colors is engaged to each of the mounting surfaces 50.
Then, in each of individual light guiding plates 49R, 49G, and 49B, concave scattering portions 52 --- for scattering the light incident from each of the LEDs 6R, 6G, and 6B are formed at the back surface 51 of the light emitting surface 48.
The concave scattering portions 52 --- are formed in parallel with the LED mounting surface 50 and formed such that the pitch is narrowed as receding from the LED mounting surface 50, by which uniform scattered light can be irradiated from the light emitting surface 48.
The light guiding member 47 is surrounded by the light scattering reflection plate 53 for other surfaces than the light emitting surface 48 and the LED mounting surface 50. Thus, the light scattering reflection plate 53 is brought into an intimate contact with the surfaces other than the light emitting surface 48 and the LED mounting surface 50 to reflect the scattered light emitted to the outside from each of the surfaces into the inside of the light guiding member 47, and a portion thereof can be utilized effectively as the lighting light.
Further, an annular light scattering transmitting plate 54 is stacked to the light emitting surface 48, such that the light irradiated from the light emitting surface 48 can be scattered more uniformly.
Also in this case, luminance unevenness or color unevenness is not caused and lowering of the measuring accuracy due to reflection of the luminance unevenness or color unevenness in the images is not caused in the same manner as described above
Further, since the light guiding member 47 may be formed by stacking the light guiding plates 49R, 49G, and 49B each formed into a cuboidal shape on every side, the cost can be decreased compared with the case of preparing the same into the annular shape.

The present invention is suitable to the application use for the lighting apparatus of scattering lights irradiated from LEDs for respective colors into the inside of the light guiding member, emitting the scattered lights from the light emitting surface uniformly and irradiating them to an object to be taken by an imaging device.
The present disclosure relates to subject matter contained in priority Japanese Patent Application No.2006-240,589 filed on September 5, 2006, the contents of which is herein expressly incorporated by reference in its entirety.

## Claims

1. A lighting apparatus for irradiating a light to an object to be taken by an imaging device, wherein an LED light source device for scattering lights of a plurality types of LEDs of different emission wavelengths by a light guiding member and irradiating them from a light emitting surface in the direction of the lighting optical axis is attached to a casing having an imaging light transmitting section through which an imaging optical axis extends from the imaging device to the object, in which
the light guiding member has a plurality of light guiding plates which are stacked with each light emitting surface being directed to the lighting optical axis,
each of the light guiding plates is mounted with LEDs at a predetermined pitch on the plane perpendicular to the light emitting surface, and
the LEDs are arranged such that the combination of the emission wavelengths is identical for each of the rows in the direction of the lighting optical axis.

2. A lighting apparatus according to claim 1, wherein the lighting optical axis of the LED light source device attached to the casing intersects the imaging optical axis at a predetermined angle, and a beam splitter for reflecting the light to the object is disposed at the point of intersection.

3. A lighting apparatus according to claim 1, wherein the casing is formed into a ring-like annular shape surrounding the imaging optical axis, the LED light source device is disposed to irradiate the light from the bottom side thereof, and the light guiding member is formed by stacking a plurality of ring-like annular transparent light guiding plates with the outer circumferential surface thereof being as an LED mounting surface and the surface opposite thereto being as a light emitting surface.

4. A lighting apparatus according to claim 1, wherein the casing is formed into a ring-like polygonal shape surrounding the imaging optical axis, the LED light source device is disposed to irradiate the light from the bottom side thereof, and the light guiding member is formed by stacking a plurality of transparent light guiding plates on every side of the ring-like polygonal shape with the outer circumferential side thereof being formed as an LED mounting surface and the surface opposite thereto being formed as a light emitting surface.

5. A lighting apparatus according to claim 1, having a driving circuit for lighting up/lighting off, or controlling the light of LEDs on every emission wavelength.

6. A lighting apparatus according to claim 1, wherein the light guiding member is formed by stacking the light guiding plates by the number corresponding to the number of the types of LEDs.

7. A lighting apparatus according to claim 1, wherein LEDs of an identical emission wavelength are mounted on every light guiding plate.

8. A lighting apparatus according to claim 1, wherein the light guiding member is formed by stacking three layers of transparent light guiding plates mounted with LEDs for respective RGB colors.

9. A lighting apparatus according to claim 1, wherein a concave scattering portion for scattering the light incident from the LED is formed to the surface opposite to the light emitting surface of each of the light guiding plates.

10. A lighting apparatus according to claim 9, wherein the concave scattering portion is formed linearly or concentrically in parallel with the LED mounting surface and formed such that the pitch is narrowed as receding from the LED mounting surface.

11. A lighting apparatus according to claim 10, wherein the linear concave scattering portion comprises dot-like pits formed continuously in the longitudinal direction thereof.

12. A lighting apparatus according to claim 1, wherein the surfaces other than the light emitting surface and the LED mounting surface of the light guiding member is surrounded with a light scattering/reflection plate.

13. A lighting apparatus according to claim 1, wherein a light scattering/transmitting plate is stacked to the light emitting surface of the light guiding member.
